# EUROPEAN PATENT SPECIFICATION

(11) **EP 0 877 307 B1**
(45) Date of publication and mention of the grant of the patent: **06.08.2003**
(21) Application number: 98500093.4
(22) Date of filing: 20.04.1998
(51) Int. Cl.: G05B 19/401

(54) **Device to measure the position of the workpiece in a lathe**
Vorrichtung zum Messung der Position eines Werkstückes in einer Drehmaschine
Dispositif pour mesurer la position de la pièce dans un tour à arbres

(30) Priority: 09.05.1997 ES 9701007
(43) Date of publication of application: 11.11.1998
(73) Proprietor: Danobat, S. Coop., 20870 Elgoibar (Guipuzkoa) (ES)
(72) Inventor: Arriola Arrizabalaga, César, 20870 Elgoibar, (Guipuzcoa) (ES)

(56) References cited:
- EP-A- 0 440 585
- EP-A- 0 562 232
- GB-A- 2 168 271

## Description

The present invention relates to a length measuring device using optical-electronic means, installed in a machine tool to measure the initial position of the workpiece to be machined, as a reference for the positioning of the tool-holder turret, according to the preamble of claim 1.

### PRIOR ART

On lathes used to machine cylindrical workpieces in series, e.g. car camshafts, the workpiece is held on the lathe chuck at one end and is machined at one or more points along the shaft, taking the free end of said workpiece as the reference for the position of the machining points. Workpieces loaded in succession do not remain in the same linear position within the chuck with respect to the machining tool: even where the chuck has an internal stop for placing the workpiece, they are not all the same length. Therefore, for each workpiece it is necessary to define the actual position of its free end as a reference for control of the movement of the tool-holder turret during machining.

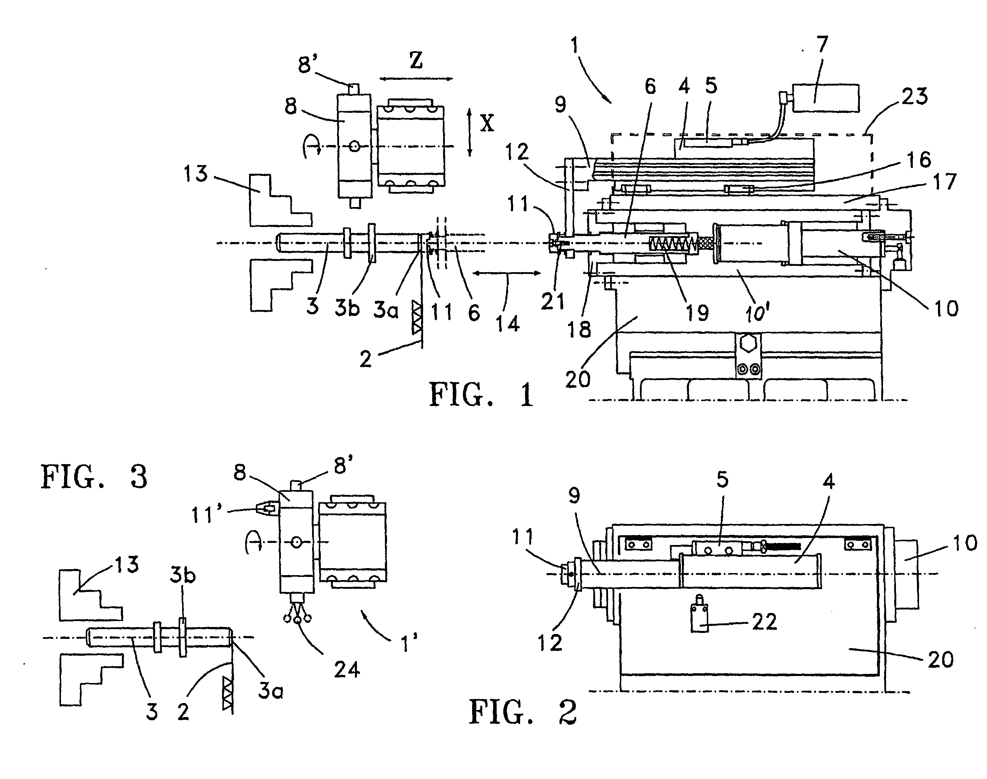

A known device for measuring the reference position, shown in the figure 3 of drawings, uses a flexible feeler head incorporated into the tool-holder turret to measure the reference position on contact with the free end of the workpiece. Because it is flexible, said feeler head produces differences in the measurement depending on the speed at which the turret moves when it engages the workpiece. A thruster, separate from the feeler head, is also incorporated into the tool-holder turret, to thrust the workpiece into its final position inside the chuck. The turret must complete successive rotations and movements to activate first the thruster and then the feeler head, followed finally by the tool selected, and must withdraw from the workpiece, transversally, before each rotation, thus taking up additional machine and work feeder time. Final placement of the workpiece can be done with the automatic workpiece feeder thereby bypassing the action of the turret to thrust the workpiece, though this solution complicates the feeder and makes it more expensive, apart from requiring further free space on the lathe in order to access from the chuck with the workpiece.

GB-2168271 describes a method for determining the position of the workpiece to be machined in a machine fitted with NC, using an optical measuring device associated with the tailstock which feeds a signal to the control unit of the real position of the tailstock, the measuring device being installed in the area of the workpiece to be machined. The workpiece is not placed on a fixed chuck of the lathe but rather on a moving table, so that the measurement is made in relation to said table. The tailstock thrusts the workpiece firmly and may deform weak workpieces.

### DISCLOSURE OF THE INVENTION

The object of the invention is a device to measure a reference position of the workpiece to be machined in a lathe or grinder, incorporated into the machine itself, as defined in claim 1.

An embodiment of the device for measuring the position of the workpiece according to the invention is constructed by means of an optical rule supported by a sliding element independent of the tool-holder turret and incorporated into the lathe on the end opposite the workpiece holder. It is able to save the time used by the lathe in positioning the workpiece to be machined while obtaining a consistently accurate measurement since the result of such measurement is not influenced by changes of workpiece length or by the retroactive effect of the workpiece when the chuck grips are tightened.

For example, car camshafts are automatically fed in to the lathe by a portal- frame type feeder and are secured at one end only on the lathe's rotary chuck: they are then machined at one or more points along the shaft, from the free end. The measuring device according to the invention means that the turret does not have to complete initial operations to place and measure the position with each workpiece fed in, which takes up between 10% and 20% of the total lathe time per workpiece, at the same time simplifying the automatic work feeder and reducing the space it occupies.

Camshafts are delicate components which do not admit sharp impact by the thruster on their ends. The measuring device according to the invention is constructed with a thrust shaft which has a feeler head and incorporates a stroke compensation spring to dampen impact on the workpiece and so not deform it, ensuring that the contact pressure for the measurement is always the same. The same protective damping effect on the measuring apparatus is obtained by coupling the measurement apparatus support plate to the thrust shaft. To attain said beneficial effects, the thruster shaft is coupled to a piston-driven shank which always completes the same total stroke, at the maximum speed.

### DESCRIPTION OF THE DRAWINGS

Figure 1 is a front elevation of the measurement device according to the invention, installed on a lathe.
Figure 2 is a plant view of the device in Figure 1.
Figure 3 represents the prior art, showing a known measuring device and a workpiece thruster both installed on the turret of a lathe.

### PREFERRED EMBODIMENT OF THE INVENTION

With reference to figures 1 and 2, a preferred embodiment 1 of the device according to the invention, for measuring along the axial direction 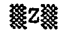 of position 2 of the end of workpiece 3 to be machined, comprises the optical unit for the measurement of lengths provided with the body of the scale 4 and the reader head 5, the support plate 9 of the body of the scale 4 which moves in direction "Z", the hydraulic piston-rod 10 coaxial with the workpiece 3 to be machined which thrusts the shank 10', the thruster shaft 6 coupled to said shank 10' and fitted with a feeler head 11, and a trans-versal joining member 12 of support plate 9 of the body of the scale 4 to the shaft 6.

The body of the scale 4 is moved in direction 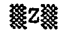 by its support plate 9 and the reader head 5 is fixed to the base 20 of the measuring device 1, the base 20 being attached in turn to the lathe bedplate. The reader head 5 transmits a signal representing the measurement of the position 2 to the electronic unit 7 for the control of the tool-holder turret 8. An example of the measuring unit used, 4,5, is the commercial model Heidenhain LS-106, with a 140 mm long nominal scale.

The workpiece to be machined, for example a car camshaft, is fitted on the lathe's workpiece chuck 13, without tightening the grips. In its movement 14, the thruster shaft 6 reaches end 3a of the camshaft 2 and thrusts it into the chuck or up to an internal stop on the chuck, and the grips then close. On contact between the feeler head 11 and the shaft 6, with the end 3a, the signal finally transmitted by the reader head 5 represents the 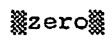 reference position 2 according to 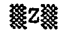 of the tool-holder movement. Thus, the measure for displacement 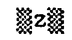 of the tool-holder to machine point 3b of the camshaft does not depend on the placing and securing of the workpiece to be machined, and the tool-holder 8 does not have to rotate more than for the positioning of the tool 8' selected.

The support 9 of the measuring apparatus slides on a pair of aligned skids 16 fixed to the housing 17 of the shank 10'. The thruster shaft 6 is coupled to the shank 10'a by a casing 18 which includes two guide bushes for the axial movement of the feeler head 11. The shank 10' completes its full stroke each time, thrusted by the piston at high pressure, e.g. 40 bar, to ensure maximum speed of movement, but the shaft 6 is braked immediately on contact with the workpiece 3, with the help of the overrun compensation spring 19. The feeler head 11 has different configurations on its outer surface and can be removed for replacement, depending on the form of the workpiece 3 to be machined, and so is bolted 21 to the shaft 6. Two superimposed microswitches 22 (fig. 2) are installed for cooperating with the reference point measuring device 1 to indicate the condition of the measuring device 1 to the portal-frame work feeder controller, whether the piston 10 is activated or the shaft 6 has been retracted to its rest position, in order to feed the following camshaft 3 to be machined.

The measuring device 1 also has a box-shaped cover around the reader head 5 and the scale 4 of the measuring apparatus.

Figure 3 shows the prior art device 1', which has a thruster 11' attached to the tool-holder 8 to thrust the workpiece 3 to its stable position. The tool-holder then rotates to place the flexible feeder 24 in contact with the end 3 in order to measure the reference position 2, and rotates the tool-holder 8 once more to position the tool 8' selected.

## Claims

1. A device for measuring the position (2) of a workpiece (3) to be machined in a lathe or grinder, comprising a length measuring apparatus (4, 5) with a movable scale (4) and a reading head (5) transmitting a signal of the linear position to a lathe control unit (7), a movable member (6, 9) which drives the scale (4) displacing it in the direction "Z" of the workpiece axis (3), and a base (20) on the machine bedplate to incorporate the measuring device (1), **characterized in that** said movable member (6, 9) driving the scale (4) is displaced and thrusts the workpiece to be machined (3), feeling its free end (3a), and the signal from the reader head (5) received by the control unit (7) representing the final position (2) of the free end (3a) of the workpiece, thereby determining the subsequent positioning of the machine's tool-holder turret (8).

2. The measuring device in claim 1 wherein the movable member (6, 9) for feeling the workpiece (3) to be machined, comprises a support plate (9) of the body of the sliding scale (4), a shaft (6) thrusting the workpiece (3) to be machined, and dragging said support plate (9), a piston shank (10') impelling the thrust shaft (6) by means of a stroke compensation spring (19), and means (18) for guiding the shaft (6) in its displacement relative to the piston shank (10').

## Patentansprüche

1. Vorrichtung zur Messung der Position (2) eines in einer Dreh- oder Schleifmaschine mechanisch zu bearbeitenden Werkstücks, die ein Längenmessgerät (4, 5) mit einer beweglichen Skala (4) und einen Ablesekopf (5) zur Übertragung eines Signals zur Angabe der linearen Position an die Steuerung (7) der Drehmaschsine, ein bewegliches Glied (6, 9) zur Mitnahme der Skala (4), das sich in Richtung (Z) der Achse des Werkstücks (3) bewegt, und eine Basis (20) an der Werkbank der Drehmaschine für die Anordnung der Messvorrichtung (1) umfasst, **dadurch gekennzeichnet, dass** sich das die Skala (4) mitnehmende bewegliche Glied (6, 9) bewegt und dabei das mechanisch zu bearbeitende Werkstück (3) vorschiebt sowie das freie Ende (3a) abtastet, während das Sugnal, das die Steuerung (7) vom Ablesekopf (5) erhält, die Endposition (2) des freien Endes (3a) des Werkstücks darstellt, um die Positionierung des Revolverkopfes (8) der Maschine festzusetzen.

2. Vorrichtung zur Messung nach Anspruch 1, wobei das bewegliche Glied (6, 9) zur Abtastung des zu bearbeitenden Werkstücks (3) eine Platte (9) zur Abstützung des gleitbaren Skalenkörpers (4), eine Schieberachse (6) für das zu bearbeitende Werkstück (3), welche die Stützplatte (9) mitnimmt, eine Kolbenstange (10') für den Antrieb der Schieberachse (6) über eine Feder (19) zum Ausgleich des Weges sowie Mittel (18) zur Führung der Achse (6) während ihrer Bewegung bezüglich der Antriebsstange (10') umfasst.

## Revendications

1. Dispositif pour mesurer la position (2) d'une pièce (3) à usiner sur un tour ou une machine à rectifier, comprenant un appareil de mesure (4,5) de longueurs avec une échelle (4) mobile et une tête de lecture (5) transmettant un signal de la position linéaire à l'unité de contrôle (7) du tour, un membre mobile (6,9) entraînant l'échelle (4) qui se déplace dans la direction (Z) de l'axe de la pièce (3), et une base (20) sur le banc de la machine pour l'incorporation du dispositif (1) de mesure, **caractérisé en ce que** le membre mobile (6,9) entraînant l'échelle (4) se déplace en poussant la pièce (3) à usiner et en palpant son extrémité (3a) dégagée, et **en ce que** le signal que l'unité de contrôle (7) reçoit de la tête de lecture (5) est représentatif de la position (2) finale de l'extrémité (3a) dégagée de la pièce, pour déterminer le positionnement qui s'ensuit de la tourelle porte-outil (8) de la machine.

2. Le dispositif de mesure de la revendication 1, où le membre mobile (6,9) pour la palpation de la pièce (3) à usiner comprend une plaque de support (9) du corps de l'échelle (4) coulissante, un axe (6) pousseur de la pièce (3) à usiner entraînant cette plaque de support (9), une tige (10') de piston poussant l'axe (6) pousseur à travers un ressort (19) de compensation de la course, et des moyens (18) de guidage de l'axe (6) dans son déplacement par rapport à la tige (10') de poussée.
